# EUROPEAN PATENT SPECIFICATION

(11) **EP 1 761 149 B1**
(45) Date of publication and mention of the grant of the patent: **05.06.2013**
(21) Application number: 05746263.2
(22) Date of filing: 10.06.2005
(51) Int. Cl.: A47J 31/18

(54) **A COFFEE MACHINE**
KAFFEEMASCHINE
MACHINE A CAFE

(30) Priority: 15.06.2004 TR 200401405
(43) Date of publication of application: 14.03.2007
(73) Proprietor: Arçelik Anonim Sirketi, 34950 Istanbul (TR)
(72) Inventor: Simsir, Bogac, Tuzla, 34950 Istanbul (TR); Buyukcan, Erdem, Tuzla, 34950 Istanbul (TR); Hasanreisoglu, Levent, Tuzla, 34950 Istanbul (TR)
(86) International application number: PCT/IB2005/051915
(87) International publication number: WO 2005/122687

(56) References cited:
- WO-A2-2004/069013
- DATABASE EPODOC EUROPEAN PATENT OFFICE, THE HAGUE, NL; XP002411757 -& GR 2001 100 013 A (STROUTSIS ALEXANDROU CHARALABO) 1 November 2002 (2002-11-01)

## Description

This invention relates to a coffee machine used to prepare Turkish coffee.

In order to prepare Turkish coffee in accordance with its traditional flavor, the mixture that is obtained by adding finely-ground coffee, sugar and cold water in desired amounts in a heating pot with a heating surface as wide as possible similar to a coffee pot, should be stirred effectively, heated slowly and served in the cups just before it reaches the boiling point while foam starts to form. The methods used in an automatic coffee machine to prepare Turkish coffee with traditional flavor and appearance should be similar with the conventional methods. There are several Turkish coffee machines manufactured wherein conventional coffee making methods are utilized, however they do not provide the flavor and consistency of Turkish coffee the way consumers demand.

The pot where Turkish coffee is cooked in is heated from the bottom by means of a heater and, it is desired that heat transfer from the heater to the coffee cooking pot is suddenly stopped as cooking is completed while desired level of foaming is reached. Because of the thermal inertia of the heating device, heat transfer to the cooking pot continues even though the energy supplied to the heater is immediately cut off, which causes coffee to be heated more than desired such that boiling point is reached and thus to boil over, resulting that the required traditional flavor of Turkish coffee is not obtained.

In the Turkish Patent Application TR 200300199, a description is given of the heating system of an automatic coffee machine which is used to prepare Turkish coffee in accordance with its traditional flavor and consistency. The pot where Turkish coffee is to be cooked is fastened by positioning it into a slideway structure such that the bottom surface to be heated is not covered and then, it is ensured that the heater contacts the mentioned bottom surface when cooking procedure starts.

A similar coffee machine is disclosed in GR2001100013A.

The aim of the present invention is the realization of a coffee machine which comprises cooking chambers that are in contact with the heater solely during the cooking process and which is used to cook Turkish coffee in a short period of time in accordance with its traditional flavor and consistency.

The coffee machine realized in order to attain above mentioned aim of the present invention is defined in claim 1 and is illustrated in the attached figures where:

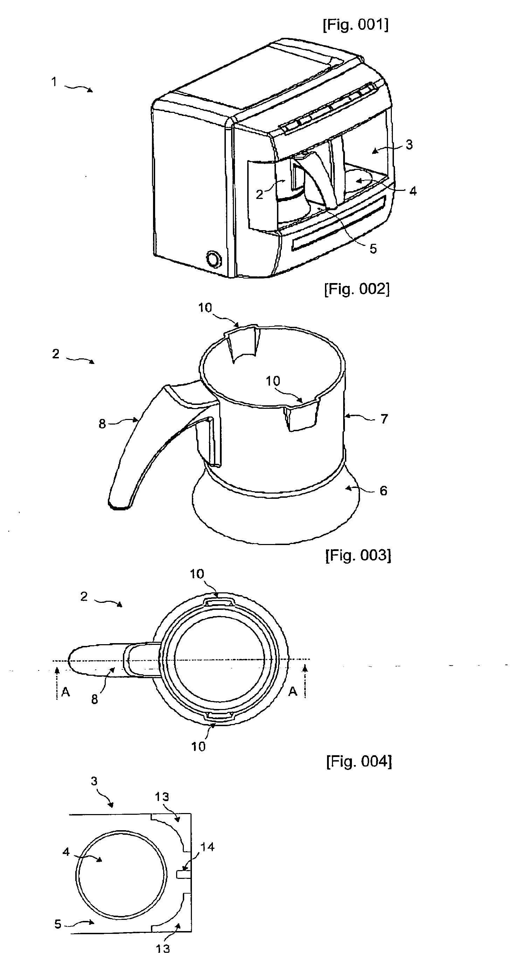

Fig.1- is a perspective view of a coffee machine.

Fig.2 - is a perspective view of a cooking chamber.

Fig.3 - is a top view of a cooking chamber.

Fig.4 - is a top schematic representation of a cooking room.

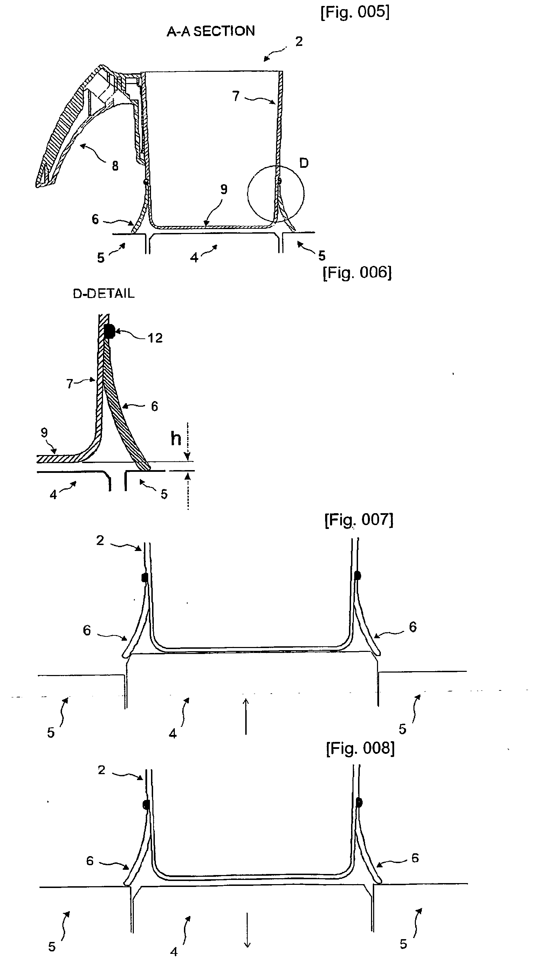

Fig.5 - is a sectional view of a cooking chamber.

Fig.6 - is a detailed sectional view of a chamber support attached to the cooking chamber.

Fig.7 - is a schematic representation of a cooking chamber, a bottom tray and a heater during cooking process.

Fig.8 - is a schematic representation of a cooking chamber, a bottom tray and a heater before or after the cooking procedure.

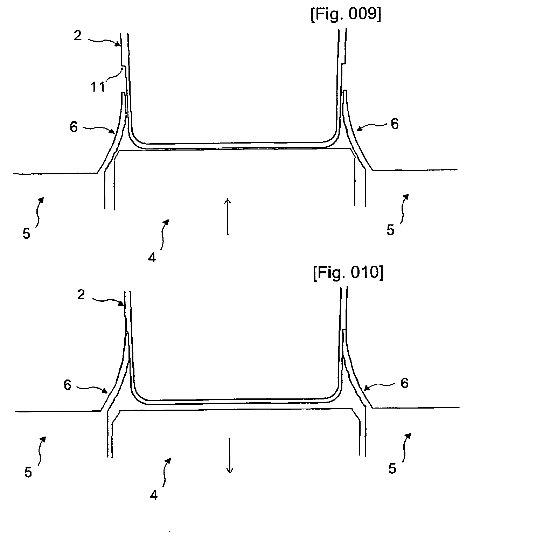

Fig.9 - is a schematic representation of a cooking chamber, a bottom tray and a heater during cooking process, in an alternative embodiment which is not part of the present invention.

Fig.10 - is a schematic representation of a cooking chamber, a bottom tray and a h eater before or after the cooking procedure, in an alternative embodiment which is not part of the present invention.

The elements shown in figures are numbered individually as follows:

| | |
|---|---|
| 1. | Coffee machine |
| 2. | Cooking chamber |
| 3. | Cooking room |
| 4. | Heater |
| 5. | Bottom tray |
| 6. | Chamber support |
| 7. | Body |
| 8. | Handle |
| 9. | Base |
| 10. | Pouring spout |
| 11. | Bearing surface |
| 12. | Joining ring |
| 13. | Centering projection |
| 14. | Positioning sensor |

The coffee machine (1) comprises one or more than one attachable / detachable cooking chamber (2) where several materials, such as coffee or sugar if preferred, that are to be cooked are added in, one or more than one cooking room (3) which incorporates one or more than one centering projection (13) facilitating the centering of the cooking chamber (2), a positioning sensor (14) which detects whether the cooking chamber (2) is placed into the cooking room (3), a heater (4) can move up and down and that is used to heat the cooking chamber (2) by contacting it from the bottom for a defined cooking period wherein its mentioned contact with the cooking chamber (2) is broken at the end of the cooking period, a bottom tray (5) where the cooking chamber (2) is placed onto and which is used to bear the heater (4) and a chamber support (6) preferably in the form of a truncated cone having lateral surfaces in the form of a concave curve, which functions as a guide in order the cooking chamber (2) to fit the heater (4) as centered by contacting the periphery of the heater (4) which ascends during the cooking procedure and, whereby the said contact of the cooking chamber (2) with the heater (4) is broken by bearing either to the bottom tray (5) or the cooking chamber (2) as the heater (4) descends after the cooking procedure.

The cooking chamber (2) comprises a body (7), a handle (8), a base (9) where heat is transferred by means of the heater (4), two wide pouring spouts (10) positioned at the upper edge of the body (7) at the right and left hand side with respect to the handle (8), whereby the coffee cooked may easily be poured into the cups by either right-handed or left-handed users without preventing the foam on the coffee from being transferred to the cups, one or more than one bearing surface (11) on the body (7) where the chamber support (6) bears to and, one or more than one joining ring (12), preferably made of stainless material, which improves the appearance by covering the junction site of the body (7) and the chamber support (6) and reinforces the said junction.

The chamber support (6) is mounted to the cooking chamber (2). The chamber support (6) and the cooking chamber (2) are joined by a tight fit process and / or by adhering or, the chamber support (6) and the cooking chamber (2) are manufactured in single piece. The base (9) level of the cooking chamber (2) is at a distance (h) above the plane formed by the lower edge of the chamber support (6). As the cooking chamber (2) is placed into the cooking room (3), the chamber support (6) fits onto the bottom tray (5) and thus, the base (9) is positioned at a distance (h) above the heater (4) which is approximately at the same level with the bottom tray (5). By that way, it is achieved that the heater (4) does not contact the base (9) except for the cooking procedure. Moreover, if the cooking chamber (2) is taken out of the coffee machine (1) after the cooking procedure and is placed on some surface, the hot base (9) is positioned at a distance (h) above that surface and thereby is prevented from damaging said surface. Additionally, it is ensured that dust and dirt on the surface do not stick to the base (9).

In the mentioned preferred embodiment, at the beginning of the cooking procedure, the cooking chamber (2) where such materials as coffee and sugar are put into is placed into the cooking room (3) by fitting the chamber support (6) to the bottom tray (5). Because of the distance (h) between the lower portion of the chamber support (6) and the base (9), the base (9) does not contact with the heater (4) which is approximately at the same level with the bottom tray (5). When the cooking procedure starts, the heater (4) that is preferably in circular form and has a diameter smaller than the inner diameter of the chamber support (6) ascends, enabling heat transfer to the cooking chamber (2) by passing through the chamber support (6) and touching the base (9). The ascending heater (4) raises the cooking chamber (2) and the chamber support (6) for an additional amount and thus, the contact between the chamber support (6) and the bottom tray (5) is broken. Since the heater (4) also contacts the inner surface of the chamber support (6) while it ascends, the chamber support (6) functions as well as a guide to fit the cooking chamber (2) onto the heater (4) as centered. When the cooking procedure is completed, the heater (4), the cooking chamber (2) and the chamber support (6) start to descend together, after the chamber support (6) touches the bottom tray (5), the heater (4) continues its downward motion and, by breaking the contact between the heater (4) and the base (9) it is ensured that the cooking chamber (2) is not affected by thermal inertia after the cooking procedure is over.

In another embodiment which is not part of the present invention, the chamber support (6) is mounted to the bottom tray (5) or is manufactured in a single piece with the bottom tray (5).

In the mentioned embodiment, at the beginning of the cooking procedure, the cooking chamber (2) where such materials as coffee and sugar are put into is placed into the cooking room (3) by fitting the chamber support (6) to the bottom tray (5). Because of the distance (h) between the lower portion of the chamber support (6) and the base (9), the base (9) does not contact with the heater (4) which is approximately at the same level with the bottom tray (5). When the cooking procedure starts, the heater (4) ascends, enabling heat transfer to the cooking chamber (2) by passing through the chamber support (6) and touching the base (9). The ascending heater (4) raises the cooking chamber (2) for an additional amount and thus, the contact between the chamber support (6) and the bearing surface (11) is broken. Since the heater (4) also contacts the inner surface of the chamber support (6) while it ascends, the chamber support (6) functions as well as a guide to fit the cooking chamber (2) onto the heater (4) as centered. When the cooking procedure is completed, the heater (4) and the cooking chamber (2) start to descend together, after the bearing surface (11) touches the chamber support (6), the heater (4) continues its downward motion and, by breaking the contact between the heater (4) and the base (9) it is ensured that the cooking chamber (2) is not affected by thermal inertia after the cooking procedure is over.

When the cooking chamber (2) is placed into the cooking room (3), the chamber support (6) is positioned above the heater (4) wherein the heater (4) and the space between the heater (4) and the bottom tray (5) are covered by the area that is surrounded by the edge of the chamber support (6) the edge of which fits to the bottom tray (5). Thereby, if coffee boils over during the cooking procedure, the overflowing liquid is prevented from reaching the heater (4) and the space between the heater (4) and the bottom tray (5) by means of the chamber support (6).

The cooking chamber (2) is manufactured preferably from aluminum material and, its outer and inner surfaces are coated with unsticking material to ensure ease of cleaning.

As the heater (4) ascends, the chamber support (6) functions as a guide to fit the heater (4) to the base (9) of the cooking chamber (2) as centered and, it is achieved that the cooking chamber (2) is beared well-balanced inside the cooking room (3).

By covering the base (9), the chamber support (6) both ensures that the user does not contacts the hot base (9) as the cooking chamber (2) is taken out of the coffee machine (1) and that the cooking chamber (2) is prevented from damaging the surfaces where it is placed and, prevents that dust and dirt on the surfaces where the cooking chamber (2) is placed stick to the base (9).

By means of the chamber support (6), the base (9) which should be well protected when the cooking chamber (2) is placed on to a ground outside the coffee machine (1), does not contact with the ground and thereby wear and scratching are prevented.

## Claims

1. A coffee machine (1) comprising; one or more than one cooking chamber (2) where several materials, such as coffee or sugar if preferred, that are to be cooked are added in; one or more than one cooking room (3) where the cooking chamber (2) is placed into; a heater (4) that is used to heat the cooking chamber (2) by contacting it from the bottom for a defined cooking period wherein its mentioned contact with the cooking chamber (2) is broken at the end of the cooking period; a bottom tray (5) where the cooking chamber (2) is placed onto and which is used to bear the heater (4); a chamber support (6), whereby the contact of the cooking chamber (2) with the heater (4) is broken by bearing either to the bottom tray (5) or the cooking chamber (2) as the heater (4) descends after the cooking procedure and **characterized by** the cooking chamber (2) comprising a base (9) where heat is transferred by means of the heater (4) and which is positioned at a distance (h) above the plane formed by the lower edge of the chamber support (6) in order for the heater (4) not to contact except for the cooking procedure, the edge of which fits to the bottom tray (5).

2. A coffee machine (1) as described in Claim 1, **characterized by** the chamber support (6) which functions as a guide in order for the cooking chamber (2) to fit the heater (4) as centered by contacting the heater (4) which ascends during the cooking procedure.

3. A coffee machine (1) as described in Claim 1, **characterized by** the chamber support (6) which is mounted to the cooking chamber (2) or is manufactured in a single piece with the cooking chamber (2).

4. A coffee machine (1) as described in Claim 1, **characterized by** the chamber support (6) which is mounted to the bottom tray (5) or is manufactured in a single piece with the bottom tray (5).

5. A coffee machine (1) as described in any of the above Claims, **characterized by** the chamber support (6) which is in the form of a truncated cone having lateral surfaces in the form of a concave curve.

6. A coffee machine (1) as described in any of the above Claims, **characterized by** the chamber support (6) whereby, if coffee boils over during the cooking procedure, the overflowing liquid is prevented from reaching the heater (4) and the space between the heater (4) and the bottom tray (5) since the heater (4) and the space between the heater (4) and the bottom tray (5) are covered by the area that is surrounded by the edge of the chamber support (6) the edge of which fits to the bottom tray (5).

7. A coffee machine (1) as described in Claim 4, **characterized by** the cooking chamber (2) comprising a bearing surface (11) on the body (7) where the chamber support (6) bears to.

8. A coffee machine (1) as described in Claim 1, **characterized by** one or more than one cooking room (3) where the cooking chamber (2) is placed into and which comprises centering projections (13) facilitating the centering of the cooking chamber (2).

9. A coffee machine (1) as described in Claim 1, **characterized by** a positioning sensor (14) which detects whether the cooking chamber (2) is placed into the cooking room (3).

10. A coffee machine (1) as described in Claim 3, **characterized by** the cooking chamber (2) comprising a joining ring (12) which improves the appearance by covering the junction site of the body (7) and the chamber support (6) and reinforces the said junction.

11. A coffee machine (1) as described in any of the above claims, **characterized by** the cooking chamber (2) comprising two wide pouring spouts (10) positioned at the upper edge of the body (7) at the right and left hand side whereby the coffee cooked may easily be poured into the cups by either right-handed or left-handed users without preventing the foam on the coffee from being transferred to the cups.

12. A coffee machine (1) as described in any of the above claims, **characterized by** the cooking chamber (2) which is manufactured from aluminum material while its outer and inner surfaces are coated with unsticking material.

## Patentansprüche

1. Kaffeemaschine (1), umfassend: eine oder mehrere Brühkammern (2), in die mehrere Materialien, etwa Kaffee oder Zucker, falls gewünscht, die gebrüht werden sollen, gegeben werden; einen oder mehrere Brühräume (3), in denen die Brühkammer (2) angeordnet sind; eine Heizeinrichtung (4), die dazu dient, die Brühkammer (2) zu erwärmen, indem während einer definierten Brühperiode mit dem Boden derselben in Kontakt tritt, wobei der Kontakt mit der Brühkammer (2) nach dem Ende der Brühperiode unterbrochen wird; einen Bodenteller (5), auf dem die Brühkammer (2) angeordnet ist und der dazu dient, die Heizeinrichtung (4) zu tragen; eine Kammerstütze (6), wodurch der Kontakt der Brühkammer (2) mit der Heizeinrichtung (4) unterbrochen wird, indem entweder vom Bodenteller (5) oder von der Brühkammer (2) gelagert wird, wenn sich die Heizeinrichtung (4) nach dem Brühvorgang absenkt, und **dadurch gekennzeichnet, dass** die Brühkammer (2) eine Basis (9) umfasst, an die mittels der Heizeinrichtung (4) Wärme übertragen wird und die in einem Abstand (h) von der Ebene angeordnet ist, die von der Unterkante der Kammerstütze (6) gebildet wird, damit die Heizeinrichtung (4) nur für den Brühvorgang Kontakt herstellt, deren Kante mit am Bodenteller (5) anliegt.

2. Kaffeemaschine (1) nach Anspruch 1, **dadurch gekennzeichnet, dass** die Kammerstütze (6) als eine Führung dient, damit die Brühkammer (2) an der zentrierten Heizeinrichtung (4) anliegt, indem sie mit der Heizeinrichtung (4), die während des Brühvorgangs angehoben wird, in Kontakt tritt.

3. Kaffeemaschine (1) nach Anspruch 1, **dadurch gekennzeichnet, dass** die Kammerstütze (6) an der Brühkammer (2) angebracht ist oder einstückig mit der Brühkammer (2) hergestellt ist.

4. Kaffeemaschine (1) nach Anspruch 1, **dadurch gekennzeichnet, dass** die Kammerstütze (6) am Bodenteller (5) angebracht ist oder einstückig mit dem Bodenteller (5) hergestellt ist.

5. Kaffeemaschine (1) nach einem der vorangehenden Ansprüche, **dadurch gekennzeichnet, dass** die Kammerstütze (6) die Form eines Kegelstumpfs aufweist, der Seitenflächen in Form einer konkaven Kurve aufweist.

6. Kaffeemaschine (1) nach einem der vorangehenden Ansprüche, **dadurch gekennzeichnet, dass** die Kammerstütze (6) verhindert, dass beim Sieden des Kaffees während des Brühvorgangs überlaufende Flüssigkeit die Heizeinrichtung (4) und den Raum zwischen der Heizeinrichtung (4) und dem Bodenteller (5) erreicht, da die Heizeinrichtung (4) und der Abstand zwischen der Heizeinrichtung (4) und dem Bodenteller (5) von dem Bereich abgedeckt sind, der von der Kante der Kammerstütze (6) umgeben ist, deren Kante an dem Bodenteller (5) anliegt.

7. Kaffeemaschine (1) nach Anspruch 4, **dadurch gekennzeichnet, dass** die Brühkammer (2) eine Tragefläche (11) am Grundkörper (7) aufweist, auf der die Kammerstütze (6) lagert.

8. Kaffeemaschine (1) nach Anspruch 1, **gekennzeichnet durch** einen oder mehrere Brühräume (3), in denen die Brühkammer (2) angeordnet ist und die Zentrierungsvorsprünge (13) aufweisen, die das Zentrieren der Brühkammer (2) ermöglichen.

9. Kaffeemaschine (1) nach Anspruch 1, **gekennzeichnet durch** einen Positionierungssensor (14), der erkennt, ob die Brühkammer (2) im Brühraum (3) angeordnet ist.

10. Kaffeemaschine (1) nach Anspruch 3, **dadurch gekennzeichnet, dass** die Brühkammer (2) einen Verbindungsring (12) umfasst, der das Erscheinungsbild verbessert, indem er die Verbindungsstelle zwischen dem Grundkörper (7) und der Kammerstütze (6) abdeckt, und die Verbindung verstärkt.

11. Kaffeemaschine (1) nach einem der vorangehenden Ansprüche, **dadurch gekennzeichnet, dass** die Brühkammer (2) zwei breite Ausgusstüllen (10) umfasst, die an der oberen Kante des Grundkörpers (7) auf der rechten und linken Seite angeordnet sind, wodurch der gebrühte Kaffee von rechtshändigen oder linkshändigen Benutzern leicht in Tassen gegossen werden kann, ohne dass verhindert wird, dass der Schaum auf dem Kaffee in die Tassen gelangen kann.

12. Kaffeemaschine(1) nach einem der vorangehenden Ansprüche, **dadurch gekennzeichnet, dass** die Brühkammer (2) aus Aluminiummaterial hergestellt ist, während ihre Außenfläche und ihre Innenfläche mit einem Antihaftmaterial beschichtet sind.

## Revendications

1. Une machine à café (1) comprenant une ou plus d'une chambre de cuisson (2) où plusieurs matériaux, comme café ou sucre si l'on préfère, à cuire sont ajoutés; un ou plus d'un compartiment de cuisson (3) dans lequel la chambre de cuisson (2) est placée ; un dispositif de chauffage (4) qui est utilisé pour chauffer la chambre de cuisson (2) en la touchant du fond pour une durée de cuisson déterminée où son contact mentionné avec la chambre de cuisson (2) est rompu afin de la durée de cuisson ; un bac de fond (5) sur lequel la chambre de cuisson (2) est placée et qui est utilisé pour supporter le dispositif de chauffage (4) ; un support de chambre (6) par lequel le contact entre la chambre de cuisson (2) et le dispositif de chauffage (4) est rompu en s'appuyant sur le bac de fond (5) ou la chambre de cuisson (2) pendant que le dispositif de chauffage (4) descend après le processus de cuisson et **caractérisée par** la chambre de cuisson (2) comprenant une base (9) où la chaleur est transférée par l'intermédiaire du dispositif de chauffage (4) et qui est positionnée à une distance (h) au-dessus du plan formé par le bord inférieur du support de chambre (6) de telle sorte que le dispositif de chauffage (4) ne touche pas sauf le processus de cuisson, dont le bord correspond au bac de fond (5).

2. Une machine à café (1) selon la Revendication 1, **caractérisée par** le support de chambre (6) qui fonctionne comme un guide de telle sorte que la chambre de cuisson (2) correspond au dispositif de chauffage (4) dans une manière centrée en touchant le dispositif de chauffage (4) qui s'élève pendant le processus de cuisson.

3. Une machine à café (1) selon la Revendication 1, **caractérisée par** le support de chambre (6) qui est attaché à la chambre de cuisson (2) ou est fabriqué en une seule pièce avec la chambre de cuisson (2).

4. Une machine à café (1) selon la Revendication 1, **caractérisée par** le support de chambre (6) qui est attaché au bac de fond (5) ou est fabriqué en une seule pièce avec le bac de fond (5).

5. Une machine à café (1) selon l'une quelconque des revendications précédentes, **caractérisée par** le support de chambre (6) qui est en forme d'un cône tronqué ayant des surfaces latérales sous la forme d'une courbe concave.

6. Une machine à café (1) selon l'une quelconque des revendications précédentes, **caractérisée par** le support de chambre (6) par lequel, si le café déborde pendant le processus de cuisson, le liquide débordant est empêché d'atteindre le dispositif de chauffage (4) et l'espace entre le dispositif de chauffage (4) et le bac de fond (5) comme le dispositif de chauffage (4) et l'espace entre le dispositif de chauffage (4) et le bac de fond (5) sont couverts par la zone qui est entourée par le bord du support de chambre (6) dont le bord correspond au bac de fond (5).

7. Une machine à café (1) selon la Revendication 4, **caractérisée par** la chambre de cuisson (2) comprenant une surface de support (11) sur le corps (7) sur laquelle le support de chambre (6) s'appuie.

8. Une machine à café (1) selon la Revendication 1, **caractérisée par** un ou plus d'un compartiment de cuisson (3) dans lequel la chambre de cuisson (2) est placée et qui comprend des projections de centrage (13) facilitant le centrage de la chambre de cuisson (2).

9. Une machine à café (1) selon la Revendication 1, **caractérisée par** un capteur de position (14) qui détermine si ou non la chambre de cuisson (2) est placée dans le compartiment de cuisson (3).

10. Une machine à café (1) selon la Revendication 3, **caractérisée par** la chambre de cuisson (2) comprenant un anneau de jonction (12) qui améliore l'apparence en couvrant la jonction du corps (7) et le support de chambre (6) et qui renforce ladite jonction.

11. Une machine à café (1) selon l'une quelconque des revendications précédentes, **caractérisé par** la chambre de cuisson (2) comprenant deux becs verseurs larges (10) positionnés sur le bord supérieur du corps (7) à la droite et la gauche par lesquels le café cuit peut facilement être versé dans les tasses par des utilisateurs droitiers ou gauchers sans empêcher la mousse sur le café d'être transféré dans les tasses.

12. Une machine à café (1) selon l'une quelconque des revendications précédentes, **caractérisée par** la chambre de cuisson (2) qui est fabriquée d'un matériau en aluminium tandis que ses surfaces extérieures et inférieures sont revêtues d'un matériau antiadhésif.
